# EUROPEAN PATENT APPLICATION

(11) **EP 3 659 960 A1**
(43) Date of publication of application: **03.06.2020**
(21) Application number: 19212290.1
(22) Date of filing: 28.11.2019
(51) Int. Cl.: B66D 5/30, F16D 65/00

(54) **BRAKING DEVICE, BRAKING SYSTEM FOR ELEVATOR, AND ELEVATOR SYSTEM**

(30) Priority: 28.11.2018 CN 201811432644
(71) Applicant: Otis Elevator Company, Farmington, Connecticut 06032 (US)
(72) Inventor: LIN, Le, Shanghai, Shanghai 200335 (CN)
(74) Representative: Dehns

(57) **Abstract**

A braking device comprises a braking unit (3, 4) and an actuating unit (1, 2) arranged to cause the braking unit (3, 4) to be in a braking state to provide a braking force to a mating external component, or in a non-braking state to stop providing the braking force to the external component, and the braking device further comprises a vibration isolating member (6) with non-linear rigidity, for providing an effect of damping and vibration isolation between the actuating unit (1, 2) and the braking unit (3, 4) at least in the non-braking state. The invention can be used to effectively decrease the influence of vibration and impact and reduce noise, and a better anti-aging performance can be achieved.

## Description

### FIELD OF THE INVENTION

The present invention relates to the technical field of electromechanical devices, and more particularly to a braking device, a braking system for an elevator, and an elevator system.

### BACKGROUND

At present, various types of braking devices have been widely used. For example, such braking devices can be used to provide a safe braking function to electromechanical devices, equipment or systems such as elevators. Although numerous braking devices have been already provided in the prior art to meet a variety of different application demands, these braking devices have some drawbacks and shortcomings in terms of, for example, vibration and shock energy absorption, noise, braking reliability, service life, and manufacturing costs. These can be further improved and optimized.

### SUMMARY OF THE INVENTION

In view of the foregoing, the present invention provides a braking device, a braking system for an elevator, and an elevator system, thereby resolving or at least alleviating one or more of the problems described above as well as problems of other aspects existing in the prior art.

Firstly, according to the first aspect of the present invention, it is provided a braking device, which comprises a braking unit and an actuating unit arranged to cause the braking unit to be in a braking state to provide a braking force to a mating external component, or in a non-braking state to stop providing the braking force to the external component, and the braking device further comprises a vibration isolating member with non-linear rigidity, for providing a damping and a vibration isolation between the actuating unit and the braking unit at least in the non-braking state.

In the braking device according to the present invention, optionally, the actuating unit comprises a housing, and an electromagnetic coil and a resetting member mounted within the housing, the braking unit comprises a moving member and a friction member connected thereto, and the electromagnetic coil, when energized, moves the moving member toward the housing and separates the friction member from the external component to put the braking unit in the non-braking state, and when de-energized, moves the moving member, via the resetting member, in a direction away from the housing and engages the friction member with the external component to put the braking unit in the braking state.

In the braking device according to the present invention, optionally, the housing and the moving member are arranged in parallel, and/or the side of the friction member facing toward the external component is configured to have a curved shape.

In the braking device according to the present invention, optionally, the vibration isolating member is adhered to the housing and/or the moving member; or
a mounting portion is arranged on the housing and/or the moving member, and a part of the vibration isolating member is disposed within the mounting portion.

In the braking device according to the present invention, optionally, the mounting portion is configured in a groove shape.

In the braking device according to the present invention, optionally, the vibration isolating member is configured to be integrally formed, or the vibration isolating member includes at least two portions that are separated from each other.

In the braking device according to the present invention, optionally, the vibration isolating member is configured in a sheet shape.

In the braking device according to the present invention, optionally, the vibration isolating member is made of polyurethane microcellular elastomers.

Secondly, according to the second aspect of the present invention, it is provided a braking system for an elevator, the braking system comprising the braking device according to any one of the above-described braking devices, and the external component is a friction disc of an elevator traction machine.

In addition, according to the third aspect of the present invention, it is provided an elevator system, which comprises a braking system for an elevator as described above.

From the following descriptions in combination with the drawings, one will clearly understand the principles, characteristics, features and advantages of the various technical solutions of the present invention. For example, in comparison with the prior art, the technical solutions of the present invention have significant technical advantages. A smaller initial damping force of braking can be achieved, and less additional force are required during braking. Furthermore, the invention can effectively increase the air gap cross-sectional area, save materials, decrease the adverse effects of vibration and shock during braking, reduce noise, and realize a better anti-aging performance.

### BRIEF DESCRIPTION OF THE DRAWINGS

The technical solutions of the present invention will be further described in detail below in conjunction with the drawings and embodiments. However, it should be understood that the drawings are designed merely for illustrative purpose and are intended only to conceptually explain the configurations described herein. It is unnecessary to draw the drawings in proportion.
Fig. 1 is a schematic view showing the configuration of a braking device in the prior art.
Fig. 2 is a schematic view showing the performance curve of the vibration isolating member illustrated in Fig. 1.
Fig. 3 is a schematic view showing the configuration of a braking device embodiment in accordance with the present invention.
Fig. 4 a schematic view showing the performance curve of the vibration isolating member illustrated in Fig. 3.

### DETAILED DESCRIPTION OF THE INVENTION

First, it should be noted that the configurations, features, and advantages of the braking device, the braking system for an elevator, and the elevator system according to the present invention will be described hereinafter by way of examples. Nevertheless, none of these descriptions should be construed, in any way, as limiting the scope of the invention.

Moreover, as for any single technical feature described or implied in the embodiments mentioned herein, or any single technical feature described or implied in the various figures, the present invention still allows any further combination or deletion of these technical features (or equivalents thereof) without any technical obstacles, and therefore it should be considered that more of such embodiments according to the invention are also within the scope of the disclosure contained in the application. In addition, the same or similar components and features may be labeled in only one or several places in the same drawing for the sake of simplicity of the drawing. Also, for the sake of brevity, general matters well known to those skilled in the art are not described herein.

In general, according to the design concept of the invention, it is provided a braking device that may comprise an actuating unit, a braking unit and a vibration isolating member with non-linear rigidity. The actuating unit is arranged to provide an actuating force so that the braking unit can be put in a braking state or a non-braking state according to the circumstances of actual demands.

Specifically, when in the braking state, the braking unit will provide a braking force to a mating external component (for example, in an application of an elevator, such external component may be a friction disc of an elevator traction machine), thereby achieving a desired braking function. When in the non-braking state, the braking unit will stop providing the braking force to the external component, i.e. not provide the braking function at this time. The vibration isolating member in the braking device is configured to have a non-linear rigidity property. By means of the vibration isolating member, an excellent damping effect can be provided between the actuating unit and the braking unit in the above-mentioned non-braking state. Such damping effect is significantly distinguished from the damping effect achieved by the conventional vibration isolating members in the prior art. A detailed comparison will be made below with reference to specific embodiments.

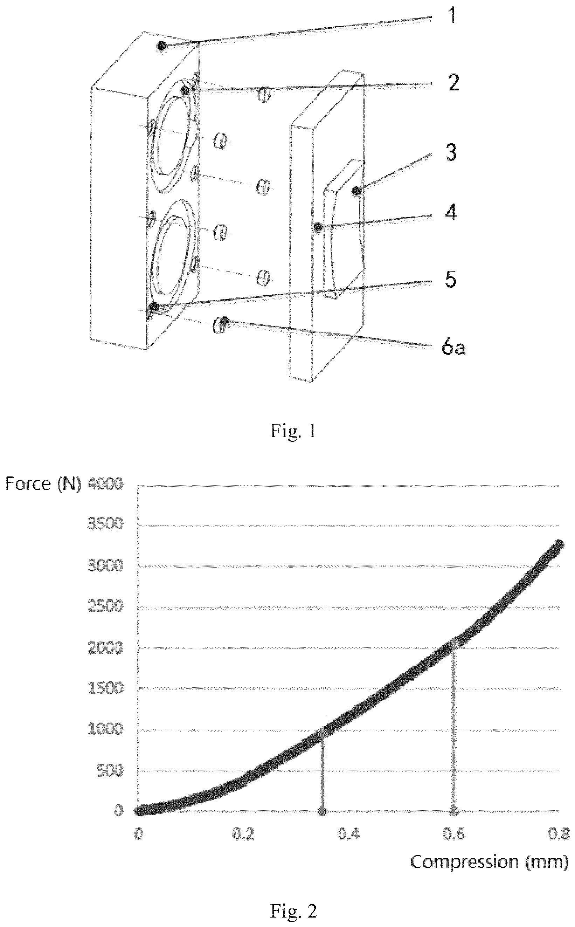

In order to get a better understanding of the technical solutions of the invention, please refer to Fig. 1 and Fig. 2 firstly. Fig. 1 schematically shows the basic configuration of a prior art braking device, and Fig. 2 is a schematic diagram of the performance curve of the vibration isolating member illustrated in Fig. 1.

As illustrated in Fig. 1, the structure of the prior art braking device has been simplified since the device is only used for exemplification. The braking device may include a housing 1, an electromagnetic coil 2, a friction member 3, a moving member 4, and a rubber vibration isolating member 6a. The electromagnetic coil 2 is mounted within the housing 1, and a plurality of blind holes 5 are necessary to be provided on the housing 1 for mounting the rubber vibration isolating member 6a therein. These rubber vibration isolating members 6a are generally configured in a cylindrical shape. The friction member 3 is arranged for having a frictional contact with the external component so as to provide a braking force thereto, and the friction member 3 can be mounted to the moving member 4 so that it can move together with the moving member 4.

In addition, the moving member 4 and the housing 1 can be connected by a connecting means, for example, using a bolt or the like, and furthermore, the moving member 4 and the housing 1 can have a relative motion therebetween by means of the electromagnetic force generated by the energized electromagnetic coil 2 and a resetting member (e.g. a spring). Specifically, when the electromagnetic coil 2 is energized, it will generate an electromagnetic force, which will cause the moving member 4 to move toward the housing 1, thereby separating the friction member 3 connected to the moving member 4 from the external component, which in turn causes the braking unit to switch to the above-described non-braking state. When the electromagnetic coil 2 is de-energized, the previously generated electromagnetic force will disappear, and at this time the moving member 4 can be moved in a direction away from the housing 1 via the above-described resetting member, thereby causing the friction member 3 connected to the moving member 4 to be engaged with the external component, which in turn causes the braking unit to switch to the above-described braking state to provide a braking function.

The inventors have found, through research, that these existing brake devices (especially the rubber vibration isolators used therein) as exemplarily discussed above still have drawbacks and deficiencies. For example, the vibration isolators made of rubber materials have been widely and customarily used in the industry, but the inventors have found, through extensive testing and research, that such existing vibration isolators have substantially linear or approximately linear rigidity, and as a result, for example, as shown in Fig. 2, when the electromagnetic coil 2 is energized, during the process of the moving member 4 hitting toward the housing 1, the force provided by the vibration isolator after it is gradually compressed grows in a limited, substantially linear manner, instead of a fast and significant manner so as to significantly decrease the force of impact; meanwhile, the vibration isolator provides a relatively large force during braking, which requires additional electromagnetic force to offset the force of the vibration isolator. Although this force can provide additional friction to the system, the force will disappear with the creep of the rubber material. In addition, the working performance (for example, the suppression of vibration, impact, noise, etc.) of these conventional rubber vibration isolators will significantly decrease after a period of use, at which point it is not only difficult to replace, but also time consuming and laborious. Also, it will affect the normal operation of the equipment. Furthermore, it is usually necessary to provide some structures such as a blind hole 5 on the surface of the housing 1 for mounting these rubber vibration isolators 6a, which will also disadvantageously decrease the air gap cross-sectional area, thereby affecting the improvement and increase of the working performance of these existing braking systems.

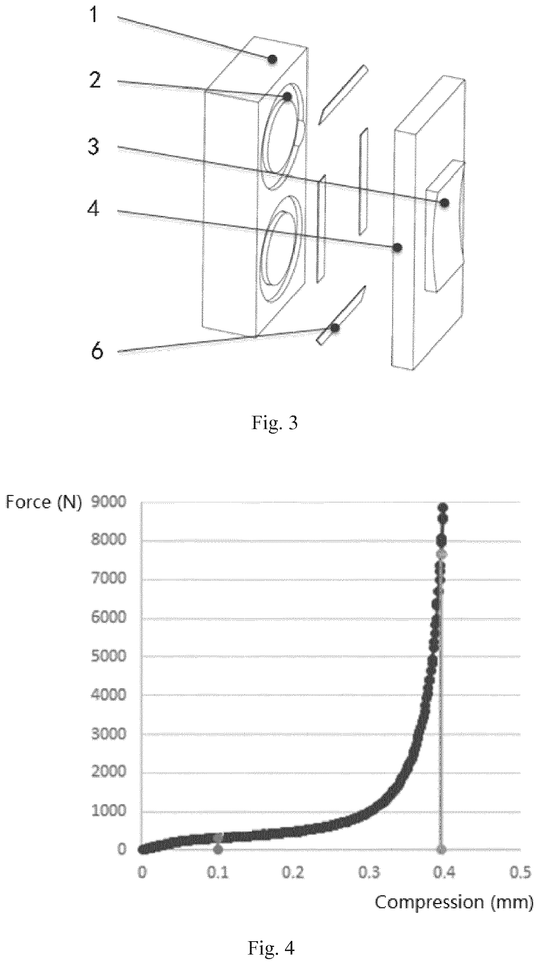

Although conventional braking devices do have the drawbacks and shortcomings as listed above, it should be noted that, since these existing braking devices have been well known and widely used, and in particular, the artisans in the industry are so accustomed to their structure, composition, manufacturing materials and so on that they have become a standard model, the problems including those enumerated above have not been well resolved for a long time before the present invention. The innovative design concept proposed by the inventors of the present invention has successfully overcome the problems existing in the prior art, achieved outstanding technical effects, and conferred significant technical advantages, none of which can possibly be provided by the existing braking devices. By way of example, the configuration of a braking device embodiment in accordance with the present invention is schematically illustrated in Fig. 3, and the performance curve of the vibration isolating member of Fig. 3 is shown in Fig. 4. To avoid repetition, the above descriptions of the same or similar structures in Fig. 1 can also be applied to the corresponding structures in Fig. 3, unless otherwise specified herein.

In this presented embodiment, the vibration isolating member 6 may be made of a material having a non-linear rigidity. Such non-linear rigidity materials include but are not limited to, for example, polyurethane microcellular elastomers (or called foamed polyurethane elastomers), and various other suitable composite materials (such as modified composite materials), and the like. By way of example, polyurethane microcellular elastomers have excellent properties, such as good mechanical properties, abrasion resistance, tear resistance, chemical resistance, and good adhesion. For example, as shown in Fig. 4, the rigidity of a vibration isolating member made of such a material having non-linear rigidity can increase in a rapid, non-linear manner as the compression of the vibration isolating member increases, and as a result, the initial elasticity when braking can be relatively small and therefore only a relatively small amount of additional electromagnetic force is needed, while when the electromagnetic coil is energized, the elasticity increases rapidly to offset the impact force, thereby conferring the vibration isolating member a very remarkable capability to absorb vibration and impact, an excellent noise performance, more ideal anti-aging properties, and a prolonged service life, and it also obviates the trouble and cost associated with the need to frequently replace the vibration isolating members.

Optionally, the vibration isolating member 6 may be integrally formed by, for example, an injection molding process or the like, or it may be configured to have two or more portions that are separated from each other, so that the vibration isolating member 6 can be appropriately arranged to provide the desired damping and vibration isolation effects as described above according to the specific circumstances of application, thereby better meeting various actual needs. In addition, the vibration isolating member 6 may be optionally configured in the shape of a sheet or any other suitable shapes.

Embodiments of the invention allow the vibration isolating member 6 to be directly adhered to the housing 1 and/or the moving member 4. As illustrated in Fig. 3, when the vibration isolating member 6 is configured in the shape of a sheet, it may be adhered to the housing 1 and/or the moving member 4 very conveniently. By adopting the above arrangement, since no structure such as the blind hole 5 shown in Fig. 1 is opened in the housing 1, not only can the material consumption of the housing 1 be decreased, but also the air gap cross-sectional area be effectively increased, thereby significantly improving the working performance of the braking device. Of course, in some embodiments, the invention also allows the disposition of a mounting portion (e.g., in the shape of a groove, etc.) on the housing 1 and/or the moving member 4 so as to arrange a part of the vibration isolating member 6 in the mounting portion. Such arrangement can be flexibly designed, changed and adjusted according to the actual applications. It should be noted that in actual applications the vibration isolating member 6 may be optionally arranged to provide damping and vibration isolation between the housing 1 and the moving member 4 in the braking state.

As shown in Fig. 3, in this presented embodiment of the braking device, the housing 1 and the moving member 4 may be arranged in parallel so as to make the overall structure more compact and the force applied to the moving member 4 faster and more efficient. Furthermore, the side of the friction member 3 facing toward the mating external component may be configured to have a curved shape to facilitate a better frictional contact therebetween, thereby forming a more stable and reliable braking force.

It should be noted that the above descriptions merely exemplify in detail that the actuating unit may be provided by means of the housing 1, the electromagnetic coil 2 and the resetting member, and the braking unit may be provided by means of the moving member 4 and the friction member 3. However, without departing from the spirit of the invention, more possible structures, components or devices, etc. may be employed in various actual applications to implement the actuating unit and the actuating unit of the present invention, for example, hydraulic pressure, mechanical force and so on may be employed instead of the electromagnetic force discussed above to provide the actuating force for the actuating unit. No repetition in this regard is provided herein.

Since the braking device according to the present invention has technical advantages significantly superior to the prior art as discussed above, such braking device is very suitable to be arranged in a wide variety of applications such as various types of elevators. The braking device provided in accordance with the invention overcomes the afore-mentioned drawbacks and shortcomings of the prior art, and therefore it is of significant importance for the further increase and improvement of the working performance of devices or equipment such as elevators and for the improvement of user satisfaction.

According to another technical solution of the present invention, it is also provided a braking system for an elevator, and a braking device designed and provided according to the invention may be arranged on such a braking system for an elevator, for example, the braking device and the friction disc of an elevator traction machine may be used in combination to fully exert the remarkable technical advantages of the invention as described above.

Furthermore, the present invention also provides an elevator system, and a braking system for an elevator designed and provided in accordance with the invention may be arranged in such an elevator system. In specific applications, such a braking system may be arranged at any suitable location in the elevator.

The braking device, the braking system for an elevator, and the elevator system have been described above in detail by way of example only. These examples are only for the purpose of illustrating the principles and the embodiments of the invention, but not intended to limit the scope of the invention. Various modifications and improvements can be made by those skilled in the art without departing from the scope of the invention. Therefore, all equivalent technical solutions are within the scope of the invention and are defined by the accompanying claims.

## Claims

1. A braking device, comprising a braking unit and an actuating unit arranged to cause the braking unit to be in a braking state to provide a braking force to a mating external component, or in a non-braking state to stop providing the braking force to the external component, **characterized in that** the braking device further comprises a vibration isolating member with non-linear rigidity, for providing a damping and a vibration isolation between the actuating unit and the braking unit at least in the non-braking state.

2. The braking device according to claim 1, wherein the actuating unit comprises a housing, and an electromagnetic coil and a resetting member mounted within the housing, the braking unit comprises a moving member and a friction member connected thereto, and the electromagnetic coil, when energized, moves the moving member toward the housing and separates the friction member from the external component to put the braking unit in the non-braking state, and when de-energized, moves the moving member, via the resetting member, in a direction away from the housing and engages the friction member with the external component to put the braking unit in the braking state.

3. The braking device according to claim 2, wherein the housing and the moving member are arranged in parallel.

4. The braking device according to claim 2 or 3, wherein the side of the friction member facing toward the external component is configured to have a curved shape.

5. The braking device according to any of claims 2-4, wherein the vibration isolating member is adhered to the housing and/or the moving member.

6. The braking device according to any of claims 2-4, wherein a mounting portion is arranged on the housing and/or the moving member, and a part of the vibration isolating member is disposed within the mounting portion.

7. The braking device according to claim 6, wherein the mounting portion is configured in a groove shape.

8. The braking device according to any preceding claim, wherein the vibration isolating member is configured to be integrally formed, or the vibration isolating member includes at least two portions that are separated from each other.

9. The braking device according to any preceding claim, wherein the vibration isolating member is configured in a sheet shape.

10. The braking device according to any preceding claim, wherein the vibration isolating member is made of polyurethane microcellular elastomers.

11. A braking system for an elevator, wherein the braking system comprises the braking device according to any preceding claim, and the external component is a friction disc of an elevator traction machine.

12. An elevator system comprising a braking system for an elevator according to claim 11.
